(19)

Europäisches
Patentamt
European
Patent Office
Office européen
des brevets

(11) **EP 2 995 698 A1**

(12) # EUROPEAN PATENT APPLICATION
published in accordance with Art. 153(4) EPC

(43) Date of publication:
**16.03.2016 Bulletin 2016/11**

(21) Application number: **14794831.9**

(22) Date of filing: **28.04.2014**

(51) Int Cl.:
*C22C 38/00* (2006.01)  *C21D 9/46* (2006.01)
*C22C 38/04* (2006.01)  *C22C 38/58* (2006.01)
*C23C 2/06* (2006.01)  *C23C 2/28* (2006.01)
*C23C 2/40* (2006.01)

(86) International application number:
**PCT/JP2014/061850**

(87) International publication number:
**WO 2014/181728 (13.11.2014 Gazette 2014/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.05.2013 JP 2013098500**

(71) Applicant: **Kabushiki Kaisha Kobe Seiko Sho (Kobe Steel, Ltd.)**
**Kobe-shi, Hyogo 651-8585 (JP)**

(72) Inventors:
• **SHIBATA Kosuke**
**Kobe-shi , Hyogo 651-2271 (JP)**

• **MURAKAMI Toshio**
**Kobe-shi 651-2271 (JP)**
• **KAJIHARA Katsura**
**Kobe-shi , Hyogo 651-2271 (JP)**
• **IKEDA Muneaki**
**Kakogawa-shi, Hyogo 675-0137 (JP)**
• **NAKAYA Michiharu**
**Kakogawa-shi, Hyogo 675-0137 (JP)**

(74) Representative: **Müller-Boré & Partner**
**Patentanwälte PartG mbB**
**Friedenheimer Brücke 21**
**80639 München (DE)**

(54) **HOT-DIP ZINC-COATED STEEL SHEET OR ALLOYED HOT-DIP ZINC-COATED STEEL SHEET HAVING SUPERIOR STRENGTH-BENDABILITY BALANCE WITH TENSILE STRENGTH OF 1180 MPa OR MORE**

(57)    This hot-dip zinc-coated steel sheet has a region that satisfies a predetermined chemical composition and contains at least 0.2% by mass of Zn in a solid solution, the region being present 5 $\mu$m or more in the depth direction of the matrix from the boundary between the coated layer and the steel plate, the Vickers hardness of a steel plate surface layer portion at 15 $\mu$m or more in the depth direction of the matrix from the boundary between the coated layer and the steel plate being 80% or less of that of the matrix center portion, and the structure excluding the martensite and bainite of the steel plate being 5% or less in terms of the area ratio.

EP 2 995 698 A1

**Description**

TECHNICAL FIELD

The present invention relates to a hot-dip galvanized steel sheet or alloyed hot-dip galvanized steel sheet for use in automobile parts, etc., having a property that the workability is excellent, despite high strength. More specifically, the present invention relates to a hot-dip galvanized steel sheet or alloyed hot-dip galvanized steel sheet being excellent in particularly bendability, among workabilities, and excellent in the strength-bendability balance with a tensile strength of 1,180 MPa or more.

BACKGROUND ART

In recent years, a hot-dip galvanized steel sheet and alloyed hot-dip galvanized steel sheet for use in automobile parts, etc. are being developed mainly with the aim of, for example, reducing the fuel consumption by vehicle weight saving and, at the same time, are required to have high strength and excellent press formability for the working of a framework part with a complicated shape.

Therefore, it is keenly demanded to provide a hot-dip galvanized steel sheet or alloyed hot-dip galvanized steel sheet having a tensile strength (TS) of 1,180 MPa or more and a bendability (limiting bending radius/sheet thickness: R/t) of 1.5 or less and furthermore the bendability of 1.0 or less, being excellent in the strength-bendability balance.

Under these circumstances, many hot-dip galvanized steel sheets or alloyed hot-dip galvanized steel sheets, of which bendability is improved, have been proposed based on various points of view of the component design or structure control, but a steel sheet having properties in which the bendability in addition to the tensile strength both satisfy the required levels is not reliably realized at present.

For example, as Patent Document 1, there has been proposed a high-strength hot-dip galvanized steel sheet, with the steel sheet surface layer part to a depth of 10 $\mu$m from the surface of the steel sheet being made soft as a structure containing, in terms of volume fraction, more than 70% of a ferrite phase, where in a bending test by the V-block method of a steel sheet with a tensile strength of 980 MPa or more, a bendability (limiting bending radius/sheet thickness: R/t) of 0.3 or less can be ensured. However, since a large amount of soft ferrite is contained in the internal structure, the tensile strength cannot reach even 1,100 MPa, and thus although excellent bendability may be ensured, a tensile strength of 1,180 MPa or more cannot be achieved. In addition, the invention of Patent Document 1 lacks a technical idea of dissolving Zn in solid in the steel sheet surface layer part and thereby enhancing the formability.

PRIOR ART LITERATURE

PATENT DOCUMENT

Patent Document 1: JP-A-2012-12703

SUMMARY OF THE INVENTION

PROBLEMS THAT THE INVENTION IS TO SOLVE

The present invention has been made to solve the above-described conventional problems, and an object of the present invention is to provide a hot-dip galvanized steel sheet or alloyed hot-dip galvanized steel sheet having such an excellent strength-bendability balance that the tensile strength is 1,180 MPa or more and the bendability (limiting bending radius/sheet thickness: R/t) in a bending test by the V-block method is 1.5 or less.

MEANS FOR SOLVING THE PROBLEMS

The hot-dip galvanized steel sheet or alloyed hot-dip galvanized steel sheet excellent in the strength-bendability balance with a tensile strength of 1,180 MPa or more of the present invention has a component composition containing, in mass%, C: from 0.05 to 0.30%, Si: from 0.05 to 3.0%, Mn: from 0.1 to 5.0%, and solute Zn from a plated layer, with the remainder being iron and unavoidable impurities, in which a region where 0.2 mass% or more of Zn is dissolved in solid is present over a 5 $\mu$m or more portion in a matrix depth direction from an interface between the plated layer and the steel sheet, in which a Vickers hardness of a steel sheet surface layer part of 15 $\mu$m in the matrix depth direction from the interface between the plated layer and the steel sheet is 80% or less of a Vickers hardness of a steel sheet central part, and in which an area percentage of a structure excluding martensite and bainite, out of a metal structure constituting the steel sheet, is 5% or less.

The hot-dip galvanized steel sheet or alloyed hot-dip galvanized steel sheet of the present invention preferably further contains one member or two or more members of, in mass%, Mo: from 0.05 to 1.0%, Cr: from 0.05 to 1.0%, Cu: from 0.05 to 1.0%, Ni: from 0.05 to 1.0%, and B: from 0.0002 to 0.0050%.

The hot-dip galvanized steel sheet or alloyed hot-dip galvanized steel sheet of the present invention preferably further contains one member or two or more members of, in mass%, Nb: from 0.01 to 0.3%, Ti: from 0.01 to 0.3%, and V: from 0.01 to 0.3%.

The hot-dip galvanized steel sheet or alloyed hot-dip galvanized steel sheet of the present invention preferably further contains one member or two or more members of, in mass%, Ca: from 0.0005 to 0.01%, Mg: from 0.0005 to 0.01%, and REM: from 0.0005 to 0.01%.

In the hot-dip galvanized steel sheet or alloyed hot-dip galvanized steel sheet of the present invention, an average grain size of the martensite existing in the steel sheet surface layer part up to 15 $\mu$m in the matrix depth direction from the interface between the plated layer and the steel sheet is preferably 3 $\mu$m or less.

ADVANTAGE OF THE INVENTION

According to the present invention, not only Zn is dissolved in solid in the steel sheet surface layer part but also the steel sheet surface layer part is made soft and furthermore, the metal structure constituting the steel sheet is configured as a structure mainly composed of martensite and bainite. Thereby, a hot-dip galvanized steel sheet or alloyed hot-dip galvanized steel sheet having such an excellent strength-bendability balance that the tensile strength is 1,180 MPa or more and the bendability (limiting bending radius/sheet thickness: R/t) in a bending test by the V-block method is 1.5 or less, can be obtained.

MODE FOR CARRYING OUT THE INVENTION

The present inventors have made intensive studies to obtain a hot-dip galvanized steel sheet or alloyed hot-dip galvanized steel sheet excellent in the strength-bendability balance, which has mechanical properties that the tensile strength (TS) is 1,180 MPa or more and nevertheless, the bendability (limiting bending radius/sheet thickness: R/t) in a bending test by the V-block method is 1.5 or less.

As a result, it has been found (1) that when Zn as a component of the hot-dip galvanized layer is dissolved in solid in the steel sheet surface layer part, the formability of the steel sheet surface layer part exposed to a concentration of deformation can be increased to enhance the bendability; (2) that when the matrix is untransformed austenite, compared with a case where the matrix is a phase other than that, the dissolution rate of Zn into the matrix from the hot-dip galvanized layer is remarkably high; and (3) that when the Vickers hardness of the steel sheet surface layer part is set to be 80% or less of the Vickers hardness of the steel sheet central part, the bendability can be improved.

The present inventors have accomplished the present invention based on findings such as explained above. The requirement of the present invention is that the steel sheet has a chemical composition containing, in mass%, C: from 0.05 to 0.30%, Si: from 0.05 to 3.0%, Mn: from 0.1 to 5.0%, with the remainder being iron and unavoidable impurities, in which 0.2 mass% or more of Zn is dissolved in solid in the steel sheet surface layer part having a thickness of 5 $\mu$m or more in the matrix depth direction from the interface between the plated layer and the steel sheet, in which the Vickers hardness of the steel sheet surface layer part at the position of 15 $\mu$m in the matrix depth direction from the interface between the plated layer and the steel sheet is 80% or less of the Vickers hardness of the steel sheet central part, and the structure excluding martensite and bainite, out of the metal structure constituting the steel sheet, is 5% or less in terms of area percentage. The reason for specifying each of these constituent requirements is as follows.

(0.2 mass% or more of Zn is dissolved in solid in the steel sheet surface layer part of 5 $\mu$m or more in the matrix depth direction from the interface between the plated layer and the steel sheet)

The surface layer part of the steel sheet is a site susceptible to fracture due to concentration of deformation during bending deformation and, by increasing the formability of this site, the bendability can be greatly enhanced. The present inventors have found that when Zn is dissolved in solid in a steel plate, the work hardening ability can be increased and the formability of the moldability of the steel plate can be enhanced. This increase in the work hardening ability is developed by dissolving 0.2 mass% or more of Zn in solid. If the thickness of the region increased in the work hardening ability by dissolving 0.2 mass% or more of Zn in solid is less than 5 $\mu$m, it is not sufficient to enhance the bendability of the steel sheet. The amount of Zn dissolved in solid is preferably 4.5 mass% or less because if 4.5 mass% or more of Zn is dissolved in solid in the steel sheet surface layer part, a compound with Fe is produced to deteriorate the bendability. In addition, the steel sheet surface layer part is specified to be 5 $\mu$m or more in the matrix depth direction from the interface between the plated layer and the steel sheet. Although this requirement does not specify the specific thickness of the steel sheet surface layer part, the upper limit of the part into which 0.2 mass% or more of Zn actually dissolves in solid from the plated layer is about 200 μm in the matrix depth direction.

(The Vickers hardness of the steel sheet surface layer part at 15 μm in the matrix depth direction from the interface between the plated layer and the steel sheet is 80% or less of the Vickers hardness of the matrix central part)

When Zn dissolves in solid in untransformed austenite, bainite transformation is accelerated, so that a softer phase, compared with the steel sheet central part, can be produced only in the steel sheet surface layer part into which Zn is dissolved in solid from the hot-dip galvanized layer. The soft phase formed in the steel sheet surface layer part is rich in the formability and therefore, the bendability of the steel material can be enhanced. Specifically, this effect can be achieved by setting the Vickers hardness of the steel sheet surface layer part at 15 μm in the matrix depth direction from the interface between the plated layer and the steel sheet to be 80% or less of the Vickers hardness of the steel sheet central part.

(The structure excluding martensite and bainite, out of the metal structure constituting the steel sheet, is 5% or less in terms of area percentage)

In order to let the steel sheet have a property of the tensile strength (TS) being 1,180 MPa or more, the metal structure constituting the steel sheet needs to contain martensite. On the other hand, when the remainder is a soft phase except for bainite, the hardness difference from martensite is large, causing fracture at the phase interface in a bending test, and therefore adequate bendability cannot be obtained. In addition, the tensile strength may lack. For these reasons, it is required that the structure excluding martensite and bainite is 5% or less in terms of area percentage.
The steel sheet of the present invention preferably further satisfies the following requirements.

(The average grain size of martensite existing in the steel sheet surface layer part up to 15 μm in the matrix depth direction from the interface between the plated layer and the steel sheet is 3 μm or less)

When coarse martensite is present in the steel sheet surface layer part, fine cracks are generated around the coarse martensite during bending deformation, as a result, the bendability is deteriorated. For this reason, the average grain size of martensite is preferably small. By setting the average grain size of martensite to be 3 μm or less, the bendability can be enhanced.

(Chemical component composition)

The chemical component composition of the steel sheet of the present invention is described below. Even if the above-described requirements concerning the metal structure, etc. are satisfied, unless the content of the chemical component (element) is in a proper range, the steel sheet of the present invention cannot exert the above-described effects. Accordingly, in the steel sheet of the present invention, it is required at the same time that the content of each chemical component is in the below-described range. In the following, all contents (%) of chemical components indicate mass%.

C: from 0.05 to 0.30%

C is an important element greatly affecting the strength of the steel sheet. If its content is less than 0.05%, a tensile strength of 1,180 MPa or more cannot be ensured. In addition, as the C content is larger, the hardenability is enhanced, and the untransformed austenite fraction during immersion in the galvanizing bath increases, so that a large amount of Zn can be dissolved in solid in the steel sheet surface layer part. As a result, the formability of the steel sheet can be increased to enhance the bendability. The C content is preferably 0.1% or more. If the C content exceeds 0.30%, the weldability cannot be ensured. For this reason, the upper limit of the C content is 0.30%.

Si: from 0.05 to 3.0%

Si is a useful element which has an effect of suppressing the growth of a carbide grain produced in the process of producing a steel sheet, thereby contributing to the enhancement of bendability, and also, as a solid-solution hardening element, contributes to the elevation of yield strength of the steel sheet. If the content exceeds 3.0%, the weldability of the steel sheet is seriously deteriorated. For this reason, the Si content is from 0.05 to 3.0%. It is preferably 2.5% or less.

Mn: from 0.1 to 5.0%

Mn is, as with Si, a useful element which has an effect of suppressing the growth of cementite during tempering, thereby contributing to the enhancement of bendability, and also, as a solid-solution hardening element, contributes to the elevation of yield strength of the steel sheet. In addition, it can increase the hardenability and thereby can form a soft layer on the surface similarly to C, so that the bendability can be enhanced. If the Mn content is less than 0.1%, such actions cannot be sufficiently brought out. On the other hand, if the Mn content exceeds 5.0%, deterioration of the castability is caused. For this reason, the Mn content is from 0.1 to 5.0%. The content is preferably from 0.5 to 3.5%, more preferably from 1.2 to 2.2%.

These are essential contained elements specified in the present invention, with the remainder being iron and unavoidable impurities. Examples of the unavoidable impurities include P, S, N and Al. In addition, the following allowable components may be added as long as the effects of the present invention are not impaired.

One member or two or more members of Mo: from 0.05 to 1.0%, Cr: from 0.05 to 1.0%, Cu: from 0.05 to 1.0%, Ni: from 0.05 to 1.0%, and B: from 0.0002 to 0.0050%

These elements can enhance the hardenability and elevate the untransformed austenite fraction during immersion in a galvanizing bath, thereby allowing a large amount of Zn to dissolve in solid in the steel sheet surface layer part and increasing the formability of steel material. If the content of each element is less than respective lower limits described above, its effect cannot be effectively exerted, whereas if the contents exceed respective upper limits, the effect is saturated.

One member or two or more members of Nb: from 0.01 to 0.3%, Ti: from 0.01 to 0.3%, and V: from 0.01 to 0.3%

These elements are elements useful for improving the strength without deteriorating the formability. If each element is added in an amount of less than 0.01 %, the above-described effect cannot be effectively exerted, whereas if the amount added is too large, the formability is deteriorated due to production of coarse carbide.

One member or two or more members of Ca: from 0.0005 to 0.01%, Mg: from 0.0005 to 0.01%, and REM: from 0.0005 to 0.01%

These elements are elements useful for refining an inclusion to decrease the number of fracture origins and thereby enhancing the formability. If each element is added in an amount of less than 0.0005%, the above-described effect cannot be effectively exerted, whereas if each element is added in an amount of more than 0.01%, inclusions conversely grow to deteriorate the formability.

(Production conditions)

In order to produce the steel sheet of the present invention satisfying the above-described requirements, the steel sheet is preferably produced while completing the following production requirements.

The production of the steel sheet of the present invention is characterized by the heat treatment after hot rolling and cold rolling of a slab. Therefore, as for the production method until hot rolling and cold rolling, a conventionally known production method may be employed. The production characteristics are described below.

• A steel sheet is heated at Ac3 point+50°C or more and 930°C or less and then held for 30 seconds or more and 1,200 seconds or less

Increasing the untransformed austenite fraction of the steel sheet during immersion in the galvanizing bath is an important requirement for producing the steel sheet of the present invention where Zn is dissolved in solid in the surface layer part. In order to increase the untransformed austenite fraction, austenite needs to be produced during annealing. In addition, in order to configure the structure during immersion in the galvanizing bath as untransformed austenite, it is effective to grow the austenite grain size and suppress transformation during cooling. Furthermore, in order to increase the strength of the steel sheet, the final structure must be composed of martensite and bainite, and an austenite single phase must be formed by annealing. For this reason, the annealing heating temperature is Ac3 point+50°C or more.

The Ac3 point can be determined from chemical components of steel sheet by using the following formula (1) described in Leslie, "The Physical Metallurgy of Steels", page 273, translated by Koda Shigeyasu, Maruzen Co., Ltd. 1985.

$$Ac3\ (°C) = 910 - 203\sqrt{[C]} - 15.2[Ni] + 44.7[Si] + 104[V] + 31.5[Mo] - (30[Mn] + 11[Cr] + 20[Cu] - 700[P] - 400[Al] - 400[Ti])\ \ ...\ \ (1)$$

In the formula (1), the [element symbol] indicates the content (mass%) of each element.

In addition, if the annealing heating temperature exceeds 930°C, the austenite grain size may excessively grow to deteriorate the bendability. For this reason, the range of the annealing heating temperature is from Ac3 point+50°C or more and 930°C or less. If the time of holding at Ac3 point+50°C or more and 930°C or less is less than 30 seconds, austenite transformation does not proceed sufficiently, failing in obtaining an adequate untransformed austenite fraction, and ferrite remains in the final structure to cause the lack of tensile strength. If it exceeds 1,200 seconds, the heat treatment cost increases, and the productivity is seriously reduced. For these reasons, the holding time is 30 seconds or more and 1,200 seconds or less.

• Rapid cooling at an average cooling rate of 15°C/sec or more to 450°C or more and 550°C or less

In the cooling step, it is important that the austenite produced during annealing is converted to untransformed austenite without causing transformation into ferrite, bainite or martensite during cooling. When the cooling stop temperature is 450°C or more, martensite transformation can be suppressed. If the cooling stop temperature exceeds 550°C, the surface texture after galvanization deteriorates. On the other hand, if the cooling rate is less than 15°C/sec, ferrite transformation or bainite transformation proceeds during cooling and not only reduction in the tensile strength is incurred but also the untransformed austenite seriously decreases. In addition, when ferrite is produced, fracture occurs at the martensite/ferrite interface during bending deformation, and thus the bendability deteriorates. The cooling rate is preferably 30°C/sec or more.

• Immersion in a hot-dip galvanizing bath within 30 seconds after the completion of rapid cooling

When held for a long time after the stop of cooling, bainite transformation or martensite transformation proceeds and thus the untransformed austenite during immersion in a galvanizing bath decreases. Therefore, the immersion in a hot-dip galvanizing bath must be performed within 30 seconds after the completion of rapid cooling. It is preferably within 15 seconds, more preferably within 10 seconds.

• Alloying treatment at 530°C or more and 570°C or less for 10 seconds or more and 60 seconds or less

For producing the steel sheet of the present invention, an alloying treatment is not necessarily required, but when an alloying treatment is performed under the above-described conditions, the bendability can be further enhanced. In the present invention, Zn is dissolved in solid in the steel plate surface layer part, whereby bainite transformation in the steel sheet surface layer part is accelerated and the bendability is enhanced. An alloying treatment is generally performed at 450°C or more and 600°C or less for 60 seconds or less, but in particular, when holding at 530°C or more and 570°C or less for 10 seconds or more is performed, bainite transformation can proceed much further in the steel sheet surface layer part in which Zn is dissolved in solid and, as a result, refinement of martensite can be achieved. If the alloying treatment temperature is less than 530°C, the diffusion rate is not sufficiently high, whereas if it exceeds 570°C, the driving force for transformation comes short. Therefore, outside of the temperature range above, bainite transformation does not proceed sufficiently even in the steel sheet surface layer part in which Zn is dissolved in solid, and martensite cannot be refined. If the treatment time is less than 10 seconds, bainite transformation in the steel sheet surface layer part is not sufficient for refining martensite, and if it exceeds 60 seconds, bainite transformation proceeds excessively also in the inside of the steel sheet, leading to a decrease in the tensile strength.

• Cooling to room temperature at an average cooling rate of 10°C/sec or more and 30°C/sec or less

If the average cooling rate is less than 10°C/sec, soft bainite or ferrite is excessively produced, and the tensile strength of 1,180 MPa or more cannot be satisfied. If the average cooling rate exceeds 30°C/sec, martensite is excessively produced also in the steel sheet surface layer part in which Zn is dissolved in solid, and the steel sheet surface layer part cannot be made sufficiently soft.

EXAMPLES

The present invention is described below in greater detail below by referring to Examples, but the present invention is of course not limited by the following Examples and can be implemented by appropriately making modifications therein as long as they are in conformity with the gist of the present invention, and all of these modifications are included in the technical range of the present invention.

Steel having each of component compositions A to K shown in Table 1 was smelted, and an ingot having a thickness of 120 mm was produced. This ingot was hot-rolled to a thickness of 2.8 mm. This was pickled and then cold-rolled to a thickness of 1.4 mm to prepare a test material, then it was subjected to heat treatment and galvanization under respective conditions shown in Table 2.

Using each of the steel sheets (test materials) obtained, the amount of the solid solution of Zn in the steel sheet surface layer part of 5 $\mu$m or more in the matrix depth direction from the interface between the plated layer and the steel sheet (amount of Zn dissolved in solid of steel sheet), the respective Vickers hardnesses of the steel sheet surface layer part at 15 $\mu$m in the matrix depth direction from the interface between the plated layer and the steel sheet and in the steel sheet central part (Vickers hardness), respective area percentages of martensite + bainite and other phases (area percentage of each phase), and the average grain size of martensite existing in the steel sheet surface layer part up to 15 $\mu$m in the matrix depth direction from the interface between the plated layer and the steel sheet (average grain size of martensite of steel sheet surface layer part) were determined by measurement. In addition, the tensile strength (TS) and the limiting bending radius (R) were also measured. The measurement methods thereof are described below.

(Amount of Zn dissolved in solid of steel sheet)

First, each steel sheet as the test material was mirror-polished. Then, the amount of the solid solution of Zn in the steel sheet surface layer part of 5 $\mu$m in the matrix depth direction from the interface between the plated layer and the steel sheet and the amount of the solid solution of Zn in the steel sheet central part (central part of the sheet thickness) was each measured at 10 points by EPMA (electron probe microanalyzer), and the average value was determined. Pure Zn was used as the reference data. A value obtained by subtracting the average amount of the solid solution of Zn in the matrix central part (central part of the sheet thickness) from the average amount of the solid solution of Zn in the steel sheet surface layer part of 5 $\mu$m in the matrix depth direction from the interface between the plated layer and the steel sheet was regarded as the amount of the solid solution of Zn in the steel sheet surface layer part of 5 $\mu$m or more in the matrix depth direction from the interface between the plated layer and the steel sheet.

(Vickers Hardness)

First, each steel sheet as the test material was mirror-polished. Then, by means of a Vickers tester with a load of 25 g (test power: 0.245 N), the measurement at 5 points was conducted in each part of the steel sheet surface layer part at 15 $\mu$m in the matrix depth direction from the interface between the plated layer and the steel sheet and the steel sheet central part (1/2 sheet thickness part), and the average values thereof were calculated to determine the Vickers hardnesses in each part.

(Area percentage of each phase)

With respect to the area percentage of each phase, each steel sheet as the test material was mirror-polished, and the surface thereof was etched with a 3% nital solution to expose the metal structure. Thereafter, the structure of the 1/2 sheet thickness part was observed by using an optical microscope, and while out of the region observed in white, the lath-like portion was defined as martensite or bainite and the polygonal portion was defined as ferrite, the region looked brown was defined as martensite. Retained austenite may also be present as a hybrid structure with martensite, but since the retained austenite considered to be produced in the present invention is very small in amount, which is seen as not affecting the properties and therefore, it is not distinguished from martensite. From these results, the area percentage of martensite + bainite and the area percentage of other phases were determined.

(Average grain size of martensite of steel sheet surface layer part)

With respect to the average grain size of martensite existing in the steel sheet surface layer part of up to 15 $\mu$m in the matrix depth direction from the interface between the plated layer and the steel sheet, each steel sheet as the test material was mirror-polished, and the surface thereof was etched with a nital solution to expose the metal structure. Thereafter, the steel sheet surface layer part of up to 15 $\mu$m in the matrix depth direction from the interface between the plated layer and the steel sheet was observed in a scanning electron microscope (SEM) image at a magnification of 2,000 times for one visual field of an approximately 40 $\mu$m$\times$15 $\mu$m region, and the portion observed in gray was defined as martensite. The martensite grain size was measured by the method described in JIS G 0551, and the average grain size was calculated from grain size numbers.

(Tensile strength)

A test piece of No. 5 described in JIS Z 2201 was produced using each steel sheet as the test material by arranging the major axis in the direction perpendicular to the rolling direction and measured according to JIS Z 2241 to determine the tensile strength (TS).

(Limiting bending radius)

A test piece of 30 mm (width) $\times$ 35 mm (length) was produced using each steel sheet as the test material by arranging the major axis in the direction perpendicular to the rolling direction and subjected to a bending test by the V-block method in conformity with JIS Z 2248. The bending radius there was variously changed from 0 to 5 mm, whereby the minimum bending radius where the bending work can be performed without causing fracture of the material was determined and this was defined as the limiting bending radius (R). In the present Example, R/t was calculated from the obtained limiting bending radius (R) and the sheet thickness (t) of the steel sheet.

The measurement results are shown in Table 3. In the present Example, a steel sheet where the tensile strength (TS) was 1,180 MPa or more and R/t determined from the limiting bending radius (R) and the sheet thickness (t) of the steel sheet was 1.5 or less was judged as passed and rated ○; and a steel sheet where the tensile strength (TS) was 1,180 MPa or more and R/t determined from the limiting bending radius (R) and the sheet thickness (t) of the steel sheet was 1.0 or less was judged as passed and rated ○○ and were decided as hot-dip galvanized steel sheets or alloyed hot-dip galvanized steel sheets excellent in the strength-bendability balance. On the other hand, a steel sheet where the tensile strength (TS) was less than 1,180 MPa and/or R/t determined from the limiting bending radius (R) and the sheet thickness (t) of the steel sheet was more than 1.5 was judged as failed and rated x. The each item underlined in Tables 1 to 3 indicates not satisfying the requirements of the present invention, recommended production conditions, properties, etc.

[Table 1]

Table 1

| Steel Species | Chemical Components (mass%) | | | | | | | | | | | | | | | | Ac3 (°C) |
|---|---|---|---|---|---|---|---|---|---|---|---|---|---|---|---|---|---|
| | C | Si | Mn | P | S | Al | Mo | Cr | Cu | Ni | Nb | Ti | V | B | N | Others | |
| A | 0.150 | 0.10 | 2.00 | 0.010 | 0.002 | 0.045 | - | - | - | - | - | - | - | - | 0.0020 | - | 801 |
| B | <u>0.010</u> | 0.10 | 2.50 | 0.010 | 0.002 | 0.045 | - | - | - | - | - | - | - | - | 0.0020 | - | 844 |
| C | 0.150 | 1.50 | 2.00 | 0.010 | 0.002 | 0.045 | - | - | - | - | - | - | - | - | 0.0020 | - | 863 |
| D | 0.150 | 0.10 | 2.00 | 0.010 | 0.002 | 0.045 | 0.200 | - | - | - | - | 0.025 | - | 0.003 | 0.0020 | - | 817 |
| E | 0.150 | 0.10 | 2.00 | 0.010 | 0.002 | 0.045 | - | 0.250 | - | - | - | 0.025 | - | 0.003 | 0.0020 | - | 808 |
| F | 0.150 | 0.10 | 2.00 | 0.010 | 0.002 | 0.045 | - | - | 0.100 | - | - | - | - | 0.003 | 0.0020 | - | 799 |
| G | 0.150 | 0.10 | 2.00 | 0.010 | 0.002 | 0.045 | - | - | - | 0.250 | - | - | - | 0.003 | 0.0020 | - | 797 |
| H | 0.150 | 0.10 | 2.00 | 0.010 | 0.002 | 0.045 | - | - | - | - | 0.050 | - | - | - | 0.0020 | - | 801 |
| I | 0.150 | 0.10 | 2.00 | 0.010 | 0.002 | 0.045 | - | - | - | - | - | 0.050 | - | - | 0.0020 | - | 821 |
| J | 0.150 | 0.10 | 2.00 | 0.010 | 0.002 | 0.045 | - | - | - | - | - | - | 0.100 | - | 0.0020 | - | 811 |
| K | 0.150 | 0.10 | 2.00 | 0.010 | 0.002 | 0.045 | - | - | - | - | - | - | - | - | 0.0020 | Ca: 0.004 Mg: 0.005 REM: 0.003 | 801 |

EP 2 995 698 A1

[Table 2]

| Table 2 | | | | | | | | | | |
|---|---|---|---|---|---|---|---|---|---|---|
| No. | Steel Species | Heat Treatment Conditions | | | | | | | | |
| | | Annealing Heating Temperature (°C) | Holding Time (sec) | Cooling Rate (°C/s) | Cooling Stop Temperature (°C) | Holding Time (sec) | Alloying Treatment | Alloying Treatment Temperature | Alloying Treatment Time | Cooling Rate |
| 1 | A | 860 | 90 | 30 | 500 | 25 | done | 580 | 20 | 25 |
| 2 | A | 860 | 90 | 30 | 500 | 10 | none | - | - | 25 |
| 3 | A | 860 | 90 | 30 | 500 | 10 | done | 540 | 20 | 25 |
| 4 | A | 810 | 90 | 30 | 500 | 10 | done | 580 | 20 | 25 |
| 5 | A | 860 | 15 | 30 | 500 | 10 | done | 580 | 20 | 25 |
| 6 | A | 860 | 90 | 5 | 500 | 10 | done | 580 | 20 | 25 |
| 7 | A | 860 | 90 | 30 | 400 | 10 | done | 540 | 20 | 25 |
| 8 | A | 860 | 90 | 30 | 500 | 50 | done | 580 | 20 | 25 |
| 9 | A | 860 | 90 | 30 | 500 | 10 | done | 580 | 20 | 50 |
| 10 | A | 860 | 90 | 30 | 500 | 10 | done | 580 | 20 | 5 |
| 11 | B | 860 | 90 | 30 | 500 | 10 | done | 580 | 20 | 25 |
| 12 | C | 915 | 90 | 30 | 500 | 25 | done | 580 | 20 | 25 |
| 13 | D | 870 | 90 | 30 | 500 | 10 | done | 580 | 20 | 25 |
| 14 | D | 870 | 90 | 30 | 500 | 25 | none | - | - | 25 |
| 15 | E | 860 | 90 | 30 | 500 | 10 | done | 540 | 20 | 25 |
| 16 | F | 860 | 90 | 30 | 500 | 10 | done | 580 | 20 | 25 |
| 17 | G | 860 | 90 | 30 | 500 | 25 | done | 580 | 20 | 25 |
| 18 | H | 860 | 90 | 30 | 500 | 10 | done | 580 | 20 | 25 |
| 19 | I | 890 | 90 | 30 | 500 | 10 | done | 540 | 20 | 25 |
| 20 | J | 890 | 90 | 30 | 500 | 10 | done | 580 | 20 | 25 |
| 21 | K | 860 | 90 | 30 | 500 | 10 | done | 540 | 20 | 25 |

EP 2 995 698 A1

[Table 3]

Table 3

| No. | Steel Species | Structure | | | | | Mechanical Properties | | | | | Judgment |
|---|---|---|---|---|---|---|---|---|---|---|---|---|
| | | Area Percentage (%) | | Amount of Solid Solution of Zn Formed in Surface Layer Part (%) | M Grain Size | Hardness of Surface Layer Part (Hv) | Hardness of Central Part (Hv) | Hardness of Surface Layer Part/Hardness of Central part | Ts (MPa) | R/t | | |
| | | M+B | Others | | | | | | | | | |
| 1 | A | 100 | 0 | 0.38 | 4.1 | 264 | 391 | 0.68 | 1284 | 1.5 | | ○ |
| 2 | A | 100 | 0 | 0.24 | 4.5 | 298 | 412 | 0.72 | 1355 | 1.5 | | ○ |
| 3 | A | 100 | 0 | 0.35 | 2.2 | 265 | 397 | 0.67 | 1302 | 1.0 | | ○○ |
| 4 | A | 73 | 27 | 0.18 | - | 285 | 315 | 0.90 | 1028 | 1.5 | | × |
| 5 | A | 82 | 18 | 0.23 | - | 307 | 351 | 0.87 | 1148 | 2.0 | | × |
| 6 | A | 91 | 9 | 0.14 | - | 308 | 346 | 0.89 | 1145 | 2.0 | | × |
| 7 | A | 100 | 0 | 0.15 | 3.8 | 335 | 351 | 0.95 | 1155 | 2.0 | | × |
| 8 | A | 100 | 0 | 0.07 | 3.5 | 307 | 320 | 0.96 | 1044 | 2.0 | | × |
| 9 | A | 100 | 0 | 0.44 | 4.1 | 411 | 420 | 0.98 | 1375 | 2.5 | | × |
| 10 | A | 79 | 21 | 0.42 | - | 257 | 265 | 0.97 | 880 | 0.8 | | × |
| 11 | B | 35 | 65 | 0.05 | - | 180 | 186 | 0.97 | 615 | 0.5 | | × |
| 12 | C | 100 | 0 | 0.35 | 5.4 | 308 | 425 | 0.72 | 1398 | 1.2 | | ○ |
| 13 | D | 100 | 0 | 0.43 | 3.8 | 294 | 405 | 0.73 | 1343 | 1.2 | | ○ |
| 14 | D | 100 | 0 | 0.27 | 4.1 | 295 | 415 | 0.71 | 1375 | 1.2 | | ○ |
| 15 | E | 100 | 0 | 0.44 | 2.5 | 277 | 411 | 0.67 | 1345 | 0.8 | | ○○ |
| 16 | F | 100 | 0 | 0.38 | 3.5 | 285 | 391 | 0.73 | 1301 | 1.2 | | ○ |
| 17 | G | 100 | 0 | 0.35 | 3.5 | 297 | 404 | 0.74 | 1336 | 1.2 | | ○ |
| 18 | H | 100 | 0 | 0.33 | 3.6 | 297 | 399 | 0.74 | 1313 | 1.2 | | ○ |
| 19 | I | 100 | 0 | 0.37 | 2.4 | 278 | 409 | 0.68 | 1345 | 0.8 | | ○○ |
| 20 | J | 100 | 0 | 0.35 | 4.2 | 303 | 412 | 0.74 | 1333 | 1.2 | | ○ |
| 21 | K | 100 | 0 | 0.34 | 2.3 | 265 | 395 | 0.67 | 1298 | 0.8 | | ○○ |

All of No. 1 to 3 and 12 to 21 were Examples of the invention satisfying the requirements of the present invention and could obtain a result that the rating is o where the tensile strength (TS) is 1,180 MPa or more and R/t determined from the limiting bending radius (R) and the sheet thickness (t) of the steel sheet is 1.5 or less, or the rating is ○○ where the tensile strength (TS) is 1,180 MPa or more and R/t determined from the limiting bending radius (R) and the sheet thickness (t) of the steel sheet is 1.0 or less. All of these can be said to be a hot-dip galvanized steel sheet or alloyed hot-dip galvanized steel sheet excellent in the strength-bendability balance.

Among these, No. 3, 15, 19 and 21 satisfy also the requirement that the average grain size of martensite existing in the steel sheet surface layer part of up to 15 μm in the matrix depth direction from the interface between the plated layer and the steel sheet is 3 μm or less, and could obtain a particularly excellent result that the rating is ○○ where the tensile strength (TS) is 1,180 MPa or more and R/t determined from the limiting bending radius (R) and the sheet thickness (t) of the steel sheet is 1.0 or less.

On the other hand, No. 4 to 11 were Comparative Examples not satisfying some requirements out of the requirements of the present invention and resulted in a rating of × where the tensile strength (TS) is less than 1,180 MPa and/or R/t determined from the limiting bending radius (R) and the sheet thickness (t) of the steel sheet is more than 1.5.

While the present invention has been explained in detail with reference to specific embodiments, it is apparent to one skilled in the art that various changes and modifications can be made therein without departing from the spirit and scope of the present invention.

This application is based on Japanese Patent Application (No. 2013-098500) filed on May 8, 2013 and Japanese Patent Application (No. 2014-043020) filed on March 5, 2014, the contents of which are incorporated here by reference.

INDUSTRIAL APPLICABILITY

The hot-dip galvanized steel sheet or alloyed hot-dip galvanized steel sheet of the present invention is excellent in the strength-bendability balance and useful for automobile parts, etc.

**Claims**

1. A hot-dip galvanized steel sheet or alloyed hot-dip galvanized steel sheet excellent in strength-bendability balance with a tensile strength of 1,180 MPa or more, comprising a plated layer composed of a zinc or a zinc alloy being formed on a surface of a steel sheet,
   having a component composition comprising, in mass%, C: from 0.05 to 0.30%, Si: from 0.05 to 3.0%, Mn: from 0.1 to 5.0%, and solute Zn from the plated layer, with the remainder being iron and unavoidable impurities,
   wherein a region where 0.2 mass% or more of Zn is dissolved in solid is present over a 5 μm or more portion in a matrix depth direction from an interface between the plated layer and the steel sheet,
   wherein a Vickers hardness of a steel sheet surface layer part of 15 μm in the matrix depth direction from the interface between the plated layer and the steel sheet is 80% or less of a Vickers hardness of a steel sheet central part, and
   wherein an area percentage of a structure excluding martensite and bainite, out of a metal structure constituting the steel sheet, is 5% or less.

2. The hot-dip galvanized steel sheet or alloyed hot-dip galvanized steel sheet according to Claim 1, further comprising at least one of (a) to (c) below:

   (a) one member or two or more members of, in mass%, Mo: from 0.05 to 1.0%, Cr: from 0.05 to 1.0%, Cu: from 0.05 to 1.0%, Ni: from 0.05 to 1.0%, and B: from 0.0002 to 0.0050%;
   (b) one member or two or more members of, in mass%, Nb: from 0.01 to 0.3%, Ti: from 0.01 to 0.3%, and V: from 0.01 to 0.3%; and
   (c) one member or two or more members of, in mass%, Ca: from 0.0005 to 0.01 %, Mg: from 0.0005 to 0.01%, and REM: from 0.0005 to 0.01%.

3. The hot-dip galvanized steel sheet or alloyed hot-dip galvanized steel sheet according to Claim 1 or 2, wherein an average grain size of the martensite existing in the steel sheet surface layer part up to 15 μm in the matrix depth direction from the interface between the plated layer and the steel sheet is 3 μm or less.

## INTERNATIONAL SEARCH REPORT

International application No.

PCT/JP2014/061850

### A. CLASSIFICATION OF SUBJECT MATTER

*C22C38/00*(2006.01)i, *C21D9/46*(2006.01)i, *C22C38/04*(2006.01)i, *C22C38/58* (2006.01)i, *C23C2/06*(2006.01)i, *C23C2/28*(2006.01)i, *C23C2/40*(2006.01)n

According to International Patent Classification (IPC) or to both national classification and IPC

### B. FIELDS SEARCHED

Minimum documentation searched (classification system followed by classification symbols)
C22C38/00, C21D9/46, C22C38/04, C22C38/58, C23C2/06, C23C2/28, C23C2/40

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2011-246746 A  (Kobe Steel, Ltd.),<br>08 December 2011 (08.12.2011),<br>entire text; all drawings<br>& US 2011/0287280 A1     & GB 2483953 A<br>& CN 102260821 A          & KR 10-2011-0128744 A | 1-3 |
| A | JP 2011-214101 A  (Kobe Steel, Ltd.),<br>27 October 2011 (27.10.2011),<br>entire text; all drawings<br>& US 2013/0017411 A1     & GB 2499689 A<br>& WO 2011/125738 A1       & CN 102844454 A<br>& KR 10-2012-0126116 A | 1-3 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>01 July, 2014 (01.07.14) | Date of mailing of the international search report<br>15 July, 2014 (15.07.14) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/061850

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-157583 A  (Kobe Steel, Ltd.),<br>18 August 2011 (18.08.2011),<br>entire text; all drawings<br>& US 2011/0186189 A1    & GB 2477419 A<br>& CN 102140608 A       & KR 10-2011-0089077 A | 1-3 |
| A | JP 2008-24972 A  (Nippon Steel Corp.),<br>07 February 2008 (07.02.2008),<br>entire text; all drawings<br>(Family: none) | 1-3 |
| A | JP 6-306533 A  (Nippon Steel Corp.),<br>01 November 1994 (01.11.1994),<br>entire text; all drawings<br>(Family: none) | 1-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012012703 A
- JP 2013098500 A
- JP 2014043020 A